Europäisches Patentamt

European Patent Office

Office européen des brevets

(11) Veröffentlichungsnummer : **0 022 951**
**B1**

(12) **EUROPÄISCHE PATENTSCHRIFT**

(45) Veröffentlichungstag der Patentschrift :
26.09.84

(21) Anmeldenummer : **80103707.8**

(22) Anmeldetag : **30.06.80**

(51) Int. Cl.³ : **G 21 C 19/06**

(54) **Lager zur horizontalen Aufbewahrung von verbrauchten Kernbrennstoffstäben.**

(30) Priorität : **23.07.79 DE 2929790**

(43) Veröffentlichungstag der Anmeldung :
**28.01.81 Patentblatt 81/04**

(45) Bekanntmachung des Hinweises auf die Patenterteilung : **26.09.84 Patentblatt 84/39**

(84) Benannte Vertragsstaaten :
**CH FR GB LI SE**

(56) Entgegenhaltungen :
**FR-A- 1 460 558**
**FR-A- 2 358 733**

(73) Patentinhaber : **KRAFTWERK UNION AKTIENGE-
SELLSCHAFT
Wiesenstrasse 35
D-4330 Mülheim (Ruhr) (DE)**

(72) Erfinder : **Schaaf, Werner, Dipl.-Ing.
Nordring 97
D-6000 Frankfurt (DE)**
Erfinder : **Charvat, Zdenek, Dipl.-Ing.
Auf der Wilze 14
D-6116 Eppertshausen (DE)**
Erfinder : **Höger, Ernst
Alte Strasse 16
D-8757 Karlstein (DE)**

(74) Vertreter : **Mehl, Ernst, Dipl.-Ing. et al
Postfach 22 01 76
D-8000 München 22 (DE)**

Jouve, 18, rue St-Denis, 75001 Paris, France

## Beschreibung

Die Erfindung betrifft ein Lager zur horizontalen Aufbewahrung von in Lagerrohren aufgenommenen verbrauchten Kernbrennstoffstäben in Lagerschächten, mit einer Transportvorrichtung, die einen abgeschirmten Schacht für die zu transportierenden Kernbrennstoffstäbe aufweist.

Aus der Zeitschrift « Nuclear Engineering International », Mai 1979, Seiten 71 bis 75, ist es zwar bekannt, daß man die Brennelemente von gasgekühlten Kernreaktoren in Behältern aufbewahrt, die dann mit Luft gekühlt werden. Die Behälter sind in einem Lager bewegbar angeordnet, weil sie von einer Stelle, an der sie beladen werden, in eine andere Lagerposition gebracht werden. Die zum Beladen dienende Handhabungsmaschine besitzt einen abgeschirmten Schacht für die Aufnahme der zu transportierenden Brennelemente. Die Behälter, die als Lagerrohre dienen, sind aber vertikal orientiert.

Aus der französischen Patentschrift FR-A-1 460 558 ist die horizontale Aufbewahrung von Stäben aus Kernbrennstoff bekannt, die in ihrem Aufbau nicht näher beschrieben sind. Es wird lediglich auf die kritische Masse des Kernbrennstoffes eingegangen, weil sie auf Grund der Anreicherung den Abstand von einzelnen, in einem Gestell fächerartig übereinanderliegenden horizontalen Aufbewahrungsebenen bestimmt. Eine solche Aufbewahrung setzt die Handhabung des Kernbrennstoffes voraus, die beim Betrieb von üblichen Leistungsreaktoren nicht in dieser Form stattfindet. Dort liegen die Kernbrennstoffstäbe nämlich als Teil von Brennelementen vor, in denen mit Hilfe von Kopf- und Fußstücken und dazwischen befindlichen Abstandshaltern die einzelnen Brennstäbe zusammengefaßt sind.

Auf die Aufbewahrung solcher Brennelemente, die nach der Energieerzeugung in einem Kernreaktor stark strahlen, ist die Erfindung gerichtet. Sie geht von der Aufgabe aus, eine möglichst schonende Behandlung der Brennelemente zu gewährleisten, damit der Kernbrennstoff in den mechanisch empfindlichen Brennelementen eingeschlossen bleibt, so daß möglichst keine Radioaktivität freigesetzt wird.

Erfindungsgemäß ist vorgesehen, daß die Lagerrohre an beiden Enden Distanzstücke aufweisen, die über den dazwischen liegenden Querschnitt der Lagerrohre hinausragen, daß die Distanzstücke in vertikale Führungen greifen und daß die Lagerrohre an den Distanzstücken aufeinander abgestützt sind.

Bei der Erfindung wird durch die Abstützung und Führung der Lagerrohre, die bei Transport und Stapelung der Brennelemente eine Schutzhülle bilden, mit Hilfe der Distanzstücke erreicht, daß die Lagerrohre selbst mechanisch wenig beansprucht sind. Diese vorteilhafte Entlastung der Lagerrohre kann auch für den Transport gelten, wenn gemäß der weiteren Ausbildung der Erfindung die Transportvorrichtung Greifeinrichtungen umfaßt, die an den Distanzstücken angreifen.

Die Transporteinrichtung kann ferner eine Ausnehmung mit einem Hubwerk aufweisen, mit dem eine jedem Lagerschacht zugeordnete Abschirmplatte in die Ausnehmung transportiert werden kann. Auf diese Weise kann die Transportvorrichtung quasi in einem Arbeitsgang den für die Lagerrohre vorgesehenen Schacht öffnen und nach dem Absenken des Lagerrohres, das das aufzubewahrende Brennelement umschließt, wieder mit der Abschirmplatte verschließen.

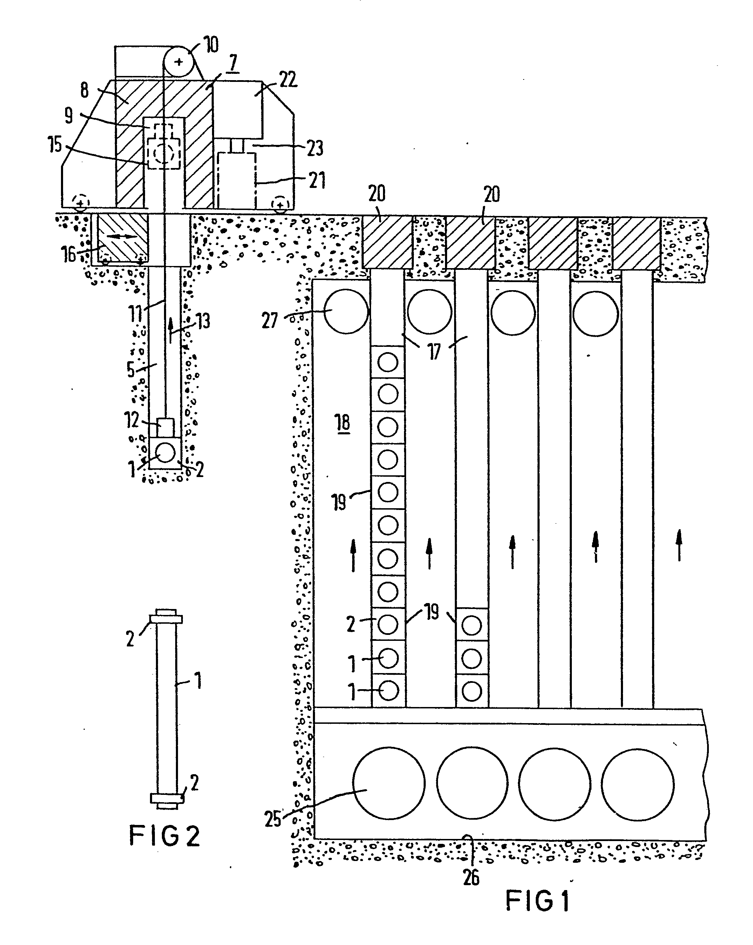

Zur näheren Erläuterung der Erfindung wird anhand der beiliegenden Zeichnung ein Ausführungsbeispiel beschrieben, das in Fig. 1 in einem Vertikalschnitt dargestellt ist. Die Fig. 2 zeigt ein Lagerrohr in einer Draufsicht.

Das in Fig. 1 in einem Ausschnitt schematisch dargestellte Lager für verbrauchte längliche Brennelemente von Kernreaktoren ist für die Lagerung der Brennelemente von Druckwasserreaktoren vorgesehen. Solche Brennelemente haben bekanntlich bei einem quadratischen Querschnitt mit etwa 20 mm Kantenlänge eine Gesamtlänge von mehr als 3 m. Sie sind deshalb mechanisch empfindlich. Bei der Erfindung werden sie unmittelbar nach ihrem Eingang im Lager von zylindrischen Lagerrohren 1 umschlossen, die an beiden Enden mit Distanzstücken 2 umgeben sind. Die Distanzstücke 2 ragen über den Querschnitt der zylindrischen Lagerrohre 1 hinaus, wobei sie einen quadratischen Querschnitt aufweisen.

In einem Schacht 5 werden die Lagerrohre 1 in nicht dargestellter Weise mit den Brennelementen beladen. Danach werden sie von einer Transportvorrichtung 7 weiterbefördert, die einen mit einer Abschirmung 8 versehenen Schacht 9 aufweist. In diesen Schacht ragt ein Hubwerk 10 für die Lagerrohre 1, dessen durch ein Seil 11 befestigter Greifer 12 an den Distanzstücken 2 angreift.

Durch Anheben der Greifer 12 in Richtung des Pfeiles 13 wird das beladene Lagerrohr 1 in die bei 15 gestrichelt gezeichnete Lage im Schacht 9 bewegt, so daß der Schacht 5 mit einem fahrbaren Abschirmriegel 16 wieder verschlossen werden kann. Die Transportvorrichtung 7 fährt dann über einen der als Lagerposition dienenden Schächte 17, die in dem Lagerraum 18 durch vertikale Führungen 19 definiert sind.

Die Schächte 17 sind im Normalfall von einer Abschirmplatte 20 abgedeckt. Diese kann, wie an der Transportvorrichtung 7 bei 21 strichpunktiert angedeutet ist, von einem Hubwerk 22 in den Bereich einer Ausnehmung 23 gehoben werden. Danach kann die Transportvorrichtung 7 den nunmehr geöffneten Schacht 17 mit einem Lagerrohr 1 bedienen, so daß eine Stapelung der Lagerrohre erfolgt, die an den Distanzstücken 2 nicht nur transportiert, sondern auch geführt werden.

Es ergibt sich ein durch die Distanzstücke 2 definierter Abstand. Dieser kann dazu dienen, daß auch Brennelemente von flüssigkeitsgekühl-

ten Kernreaktoren, insbesondere von Druck-wasserreaktoren, mit Kühlluft ausreichend ge-kühlt werden können. Das Lager ist dann ein Trockenlager. Die Kühlluft, die durch Kühllufteinlässe 25 am Boden 26 des Raumes 18 eintritt und durch Auslaßöffnungen 27 abgezogen wird, kann unter Umständen zur Verwertung der Wärme über Wärmetauscher geführt werden. Die Lagerrohre können aus neutroneabsorbierendem Material, zum Beispiel Borstahl, bestehen oder damit belegt werden.

### Ansprüche

1. Lager zur horizontalen Aufbewahrung von in Lagerrohren (1) aufgenommenen verbrauchten Kernbrennstoffstäben in Lagerschächten (17), mit einer Transportvorrichtung (7) die einen abgeschirmten Schacht für die zu transportierenden Kernbrennstoffstäbe aufweist, dadurch gekennzeichnet, daß die Lagerrohre (1) an beiden Enden Distanzstücke (2) aufweisen, die über den dazwischen liegenden Querschnitt der Lagerrohre (1) hinausragen, daß die Distanzstücke (2) in vertikale Führungen (19) greifen, und daß die Lagerrohre (1) an den Distanzstücken (2) aufeinander abgestützt sind.

2. Lager nach Anspruch 1, dadurch gekennzeichnet, daß die Transportvorrichtung (7) Greifeinrichtungen (12) umfaßt, die an den Distanzstücken (2) angreifen.

3. Lager nach Anspruch 2, dadurch gekennzeichnet, daß die Transportvorrichtung (7) eine Ausnehmung (23) mit einem Hubwerk (22) aufweist, mit dem eine jedem Lagerschacht (17) zugeordnete Abschirmplatte (20) in die Ausnehmung (23) transportiert werden kann.

### Claims

1. Storage means for the horizontal storage of spent nuclear fuel rods in storage tubes (1), in sotrage shafts with a conveying device (7) which is provided with a shielded shaft for the nuclear fuel rods which are to be conveyed, characterised in that the storage tubes (1) are provided at both ends with spacer members (2) which extend beyond the cross-section of the storage tubes (1) disposed therebetween, that the spacer members (2) engage in vertical guides (19) and that the storage tubes (1) bear upon each other on the spacer members.

2. Storage means according to claim 1, characterised in that the conveying device (7) comprises gripper means (12) which engage with the spacer members (2).

3. Storage means according to claim 2, characterised in that the conveying device (7) is provided with an opening (23) and a lifting mechanism (22) by means of which a respective shielding plate (20) associated with each respective storage shaft (17) can be conveyed into the opening (23).

### Revendications

1. Dispositif pour le stockage horizontal dans des puits de stockage (17) de barreaux usés de combustible nucléaire reçus dans des tubes de stockage (1), comprenant un château de transport (7) qui présente un puits blindé (9) pour les barreaux de matière combustible à transporter, caractérisé en ce que les tubes de stockage (1) présentent aux deux extrémités des pièces d'entretoise (2) qui sont en saillie sur la section transversale des tubes de stockage (1) qui se trouvent entre elles, en ce que les pièces d'entretoise (2) pénètrent dans des guidages verticaux (9) et en ce que les tubes de stockage (1) sont appuyés les uns sur les autres par les pièces d'entretoise (2).

2. Dispositif suivant la revendication 1, caractérisé en ce que le château de transport (7) comprend des dispositifs de préhension (12) qui attaquent les pièces d'entretoise (2).

3. Dispositif suivant la revendication 1, caractérisé en ce que le château de transport (7) présente une partie vide (23) avec un dispositif de levage (22), par lequel on peut transférer dans la partie vide la plaque de blindage (20) associée à un puits de stockage (17).

FIG 2

FIG 1